# EUROPÄISCHE PATENTSCHRIFT

(11) **EP 1 373 105 B1**
(45) Veröffentlichungstag und Bekanntmachung des Hinweises auf die Patenterteilung: **15.09.2004**
(21) Anmeldenummer: 02732348.4
(22) Anmeldetag: 20.03.2002
(51) Int. Cl.: B65G 1/02, A47B 57/10

(54) **LAGERREGAL MIT LIFT**
STORAGE SHELVING COMPRISING A LIFT
ELEVATEUR DE STOCKAGE A ETAGERES

(30) Priorität: 23.03.2001 DE 10115765
(43) Veröffentlichungstag der Anmeldung: 02.01.2004
(73) Patentinhaber: Bellheimer Metallwerk GmbH, D-76752 Bellheim (DE)
(72) Erfinder: BOUCHE, Norbert, 76829 Landau (DE); MCFARLAND, John, Rugby CW21 4DQ (GB)
(74) Vertreter: Grünecker, Kinkeldey, Stockmair & Schwanhäusser
(86) Internationale Anmeldenummer: PCT/DE2002/001073
(87) Internationale Veröffentlichungsnummer: WO 2002/076857

(56) Entgegenhaltungen:
- DE-U- 8 235 808
- DE-U- 29 506 782
- DE-U- 29 807 208

## Beschreibung

Die Erfindung betrifft einen Lagerlift mit einer Vielzahl von übereinander und im Abstand voneinander an sich gegenüberliegenden Wänden eines Gehäuses angeordneten Stützprofilpaaren für ein- und auslagerbare Lagergutträger sowie mit einem gegenüber den Stützprofilpaaren auf- und abbewegbaren Vertikalförderer, der mit einer Horizontalfördervorrichtung versehen ist, durch die in die Lagergutträger eine Horizontalbewegung einleitbar ist, um sie vom Vertikalförderer auf jeweils ein Stützprofilpaar oder von einem Stützprofilpaar auf den Vertikalförderer zu überführen, wobei die Stützprofile als in das Innere des Gehäuses ragende, integrale Ausbuchtungen von Profilplatten ausgebildet sind, die einen im wesentlichen mäanderförmigen Querschnitt aufweisen und an vertikalen Tragpfosten befestigt sind.

Lagerlifte der vorstehenden Art beanspruchen verhältnismäßig wenig Standfläche und lassen sich nicht zuletzt aus diesem Grund, sei es zur Aufbewahrung von Werkzeugen oder zur Zwischenlagerung von Werkstücken, besonders gut in industrielle Fertigungsprozesse integrieren. Aufgrund ihrer Größe ist eine Montage am Aufstellungsort unabdingbar, wobei der Einsatz vormontierter Baugruppen zur vom Abnehmer geforderten Schnelligkeit des Aufbaus beiträgt und folglich durchaus üblich ist. Der Wahl und Ausgestaltung unterschiedlicher, jeweils Endmontageeinheiten bildender Baugruppen kommt bei alledem eine maßgebliche Bedeutung zu.

Mit zunehmender Größe der einzelnen vor Ort miteinander zu verbindenden Baugruppen stellen sich indes sowohl zunehmende Transport- als auch Endmontageprobleme ein.

Bei einem aus der DE 195 01 718 A1 bekannten Lagerlift sind die aus Stahlblech bestehenden Profilplatten im Bereich ihrer vertikalen Ränder durch Schweißen mit den Tragpfosten des Liftes zu vergleichsweise schweren und sperrigen Montageeinheiten verbunden, die Seitenwandteile des Gehäuses des Lagerliftes bilden.

Die Abmessungen der vorgenannten Montageeinheiten erschweren sowohl deren Transport als auch ihre Montage vor Ort. Abgesehen hiervon vermag die bekannte Konstruktion auch insofern nicht voll zu befriedigen als zur Erzielung einer ausreichenden Steifigkeit der Stützprofile die Stärke der zu ihrer Herstellung verwendeten Stahlbleche vergleichsweise groß sein muß. Als unzweckmäßig erweist sich bei dem bekannten Lagerlift zudem der Umstand, daß die von den Profilplatten gebildeten Wandteile nicht nur profilierte Innenwandabschnitte, sondern auch profilierte Außenwandabschnitte bilden, welch letztere unerwünschte Staubablagerungen begünstigen.

Aus Stahlblech durch Einpressen von Stützprofile bildenden Hohlstegen hergestellte Seitenwandabschnitte sind auch aus der DE 298 07 208 U1, der einen Lagerlift gemäß dem Oberbegriff des Anspruchs 1 offenbart, bekannt. In diesem Fall werden bei Montage des Lagerliftes vergleichsweise kleine Profilplatten durch eine Vielzahl von Schrauben mit den Tragpfosten verbunden. Der Zeitaufwand für die Schraubarbeiten und die Kosten für die Herstellung der Gewindebohrungen in den Tragpfosten sind beträchtlich. Bezüglich der Steifigkeit der Profilstege stellt sich wie bei dem zuvor beschriebenen bekannten Lagerlift das Problem, daß die wirtschaftliche Herstellung der Profilierung kleine Blechstärken, die einwandfreie Abstützung der Lastträger hingegen große Blechstärken verlangt.

Der Erfindung liegt die Aufgabe zugrunde, einen Lagerlift der in Betracht gezogenen Art zu schaffen, der mit kostengünstig herstellbaren und schnell montierbaren Profilplatten großer Steifigkeit ausgestattet ist. Gelöst wird die Aufgabe erfindungsgemäß dadurch, daß die Profilplatten an ihrer Außenseite durch fest mit ihnen zu einem sandwichartigen Wandelement verbundene Tragplatten versteift sind und daß jede der mit Stützprofilen versehenen Wände aus mehreren über-einander angeordneten Wandelementen besteht, deren Tragplatten einzeln in die Tragpfosten einhängbar sind.

Die Sandwichbauweise der Profilplatten des erfindungsgemäßen Lagerliftes kommt nicht nur der Biegesteifigkeit der einzelnen Profile, sondern auch der Platte in ihrer Gesamtheit zugute und schafft so die Voraussetzungen für die Anwendung der vorgeschlagenen "Einhängemontage". Daß die durch die Tragplatten erzielte Glattflächigkeit der mit Profilplatten ausgestatteten äußeren Seitenwandabschnitte des Liftgehäuses einen zusätzlichen Vorteil bietet, liegt auf der Hand.

Weitere Merkmale und Einzelheiten der Erfindung ergeben sich aus den Unteransprüchen und der nachstehenden Beschreibung eines in den beigefügten Zeichnungen dargestellten Ausführungsbeispieles. Es zeigen:
- Fig. 1: die perspektivische Ansicht eines weitgehend fertigmontierten Lagerliftes;
- Fig. 2: in vergrößertem Maßstab Einzelheiten der Tragpfosten des Lagerliftes gemäß Fig. 1;
- Fig. 3: in vergrößertem Maßstab Einzelheiten der zu Wandelementen für den Lagerlift gemäß Fig. 1 miteinander zu verbindenden Platten;
- Fig. 4: die beim Einhängen von Wandelementen in die Tragpfosten miteinander in Eingriff tretenden Teile;
- Fig. 5: die Teilansicht eines in einen Tragpfosten eingehängten Wandelementes;
- Fig. 6: einen Schnitt durch die in Fig. 5 dargestellten Teile und
- Fig. 7: eine schematisierte Darstellung der sich überlappenden Teile dreier übereinander angeordneter Wandelemente.

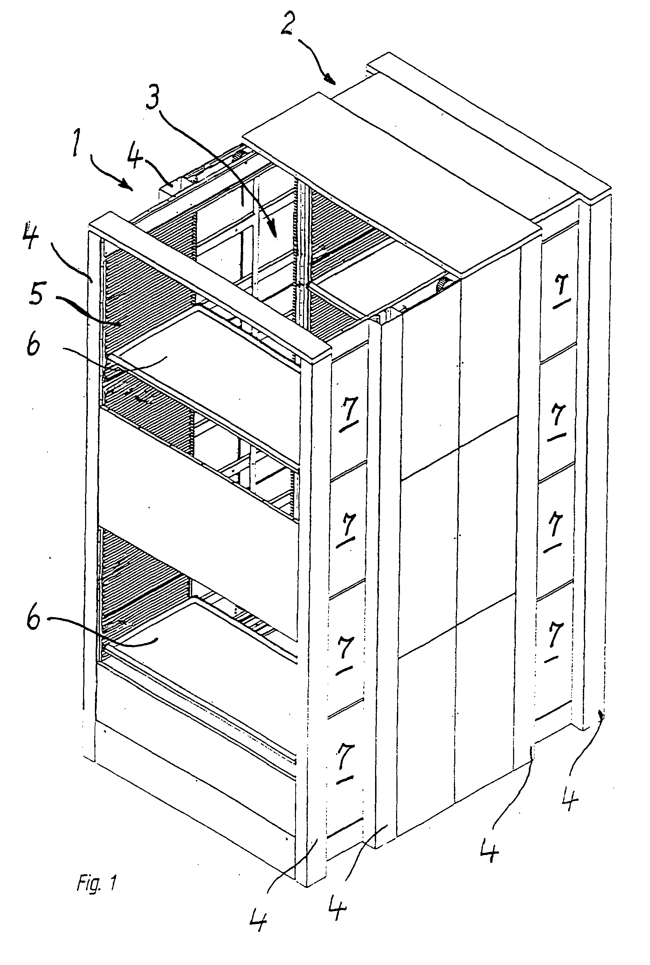

Der in Fig. 1 dargestellte Lagerlift besteht aus zwei Regalsäulen 1 und 2, die zwischen sich einen Schacht 3 für einen nicht dargestellten Vertikalförderer einschließen und von denen eine jede vier Tragpfosten 4 aufweist, mit denen jeweils mehrere, Stützprofile 5 für Lagergutträger 6 bildende seitliche Wandelemente 7 lösbar verbunden sind. Der vorstehend beschriebene grundsätzliche Aufbau entspricht dem Stand der Technik und bedarf mithin keiner eingehenderen Erläuterung.

Die einen C-Profilquerschnitt aufweisenden Tragpfosten 4 sind abweichend von bisher Bekanntem beidseits ihres in vertikaler Richtung verlaufenden Längsschlitzes 8 mit jeweils einer Reihe im Abstand A voneinander aufeinanderfolgender H-förmiger Ausstanzungen 9 versehen, von denen eine jede zwei sich gegenüberliegende Haltevorsprünge 10, 11 bildet. Die H-Form der Ausstanzungen 9 entbindet den Monteur des Lagerliftes bei Aufrichten der Tragpfosten 4, eine bestimmte Schwenkrichtung einzuhalten. Ist man bereit, auf diese Schwenkrichtungsunabhängigkeit zu verzichten, so können an die Stelle der H-förmigen Ausstanzungen T-förmige Ausstanzungen mit nur jeweils einem Haltevorsprung treten.

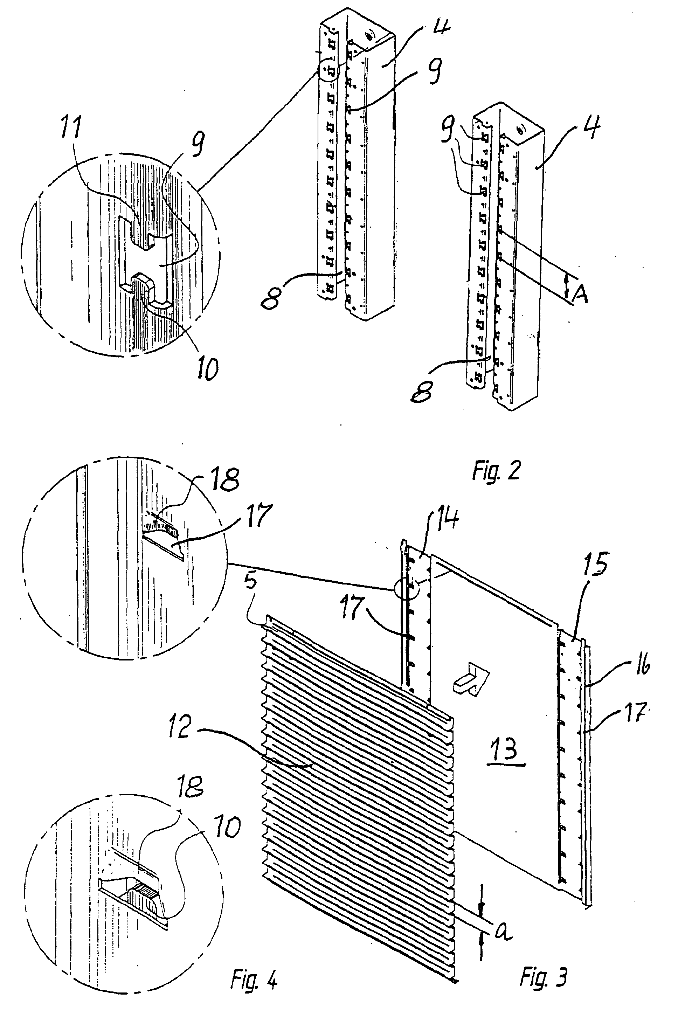

Die Ausstanzungen 9 ermöglichen das bequeme und schnelle Einhängen sowie in Schadensfällen das nicht minder einfache Aushängen von Wandelementen 7, die im vorliegenden Falle aus jeweils einer Profilplatte 12 und einer sandwichartig mit dieser verbundenen Tragplatte 13 bestehen. In Fig. 3 sind die beiden Platten 12, 13 zum besseren Verständnis getrennt voneinander dargestellt. Wie man erkennen kann, weist die Tragplatte 13 im Bereich ihrer mit den Tragpfosten 4 zu verbindenden Seitenränder in vertikaler Richtung verlaufende U-förmige Profilabschnitte 14, 15 auf, die einerseits die Stabilität der Tragplatte 13 erhöhen und andererseits die Voraussetzung für die Nutzung eines der Seitenränder der Tragplatte 13 als Leitflanke 16 für im Bereich einer Beschickungsöffnung auf die Stützprofile 5 der Profilplatten 12 zu überführenden Lagergutträger 6 schaffen.

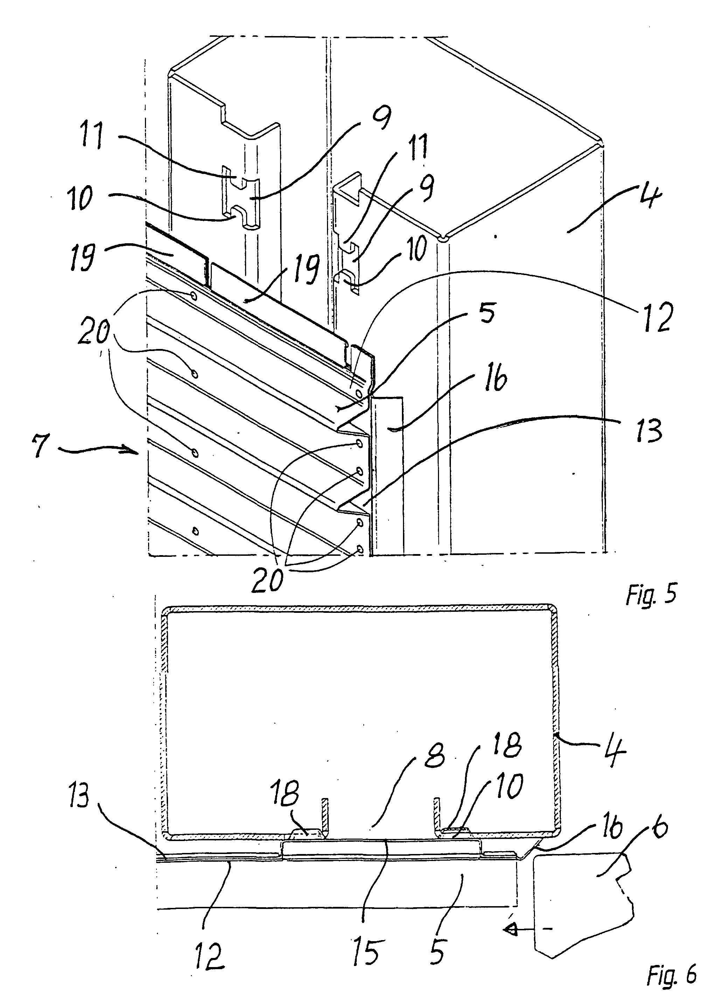

Die Tragplatten 13 sind mit den Ausstanzungen 9 zugeordneten Ausstanzungen 17 versehen, welche gaubenförmige Vorsprünge 18 bilden, die Taschen zur Aufnahme der Haltevorsprünge 10 formen, wie dies aus Fig. 4 erkennbar ist.

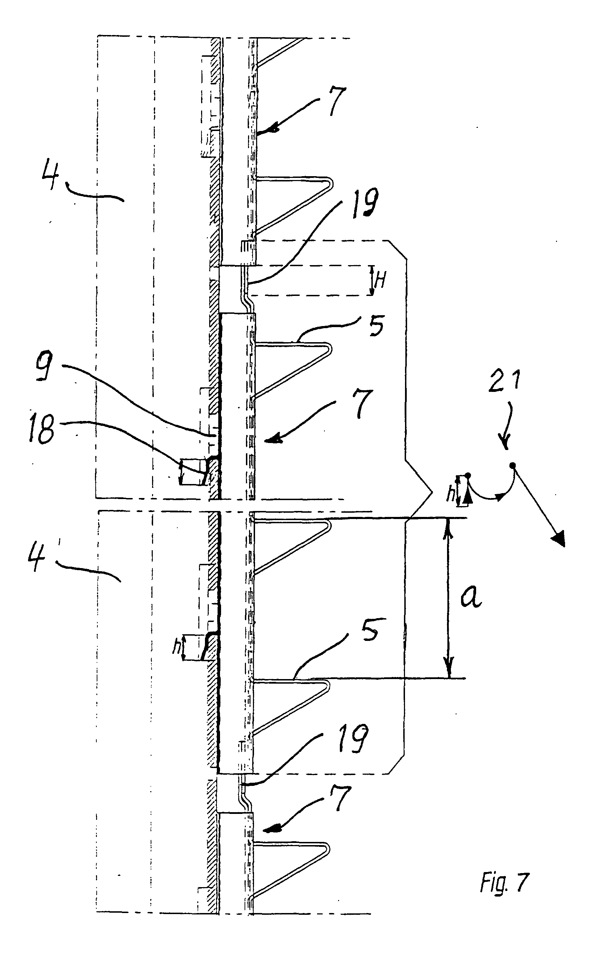

Fig. 5 zeigt in vergrößertem Maßstab einen Abschnitt eines in einen Tragpfosten 4 eingehängten Wandelementes 7, das an seinem horizontalen oberen Rand mit laschenförmigen Vorsprüngen 19 versehen ist, die - wie aus Fig. 7 entnehmbar - eine überlappende Anordnung aufeinanderfolgender Wandelemente 7 ermöglichen. Zur Verbindung der jeweiligen Profilplatte 12 mit einer Tragplatte 13 dient eine Vielzahl von Schweißpunkten 20. Um eine stabile Verbindung zwischen den Wandelementen 7 und den Stützpfosten 4 zu gewährleisten, sollte der Abstand A zwischen jeweils zwei benachbarten Ausstanzungen 9 bzw. 17 nicht größer sein als der dreifache Wert des Abstandes a zwischen jeweils aufeinanderfolgenden Stützprofilen 5. Im übrigen ist dafür Sorge zu tragen, daß die Vorsprünge 19 hinreichend lang sind, um der Bedingung H > h zu genügen, d.h. um jedes Wandelement in der bei 21 in Fig. 7 angedeuteten Weise aushängen und in entgegengesetzter Richtung wieder einhängen zu können.

## Patentansprüche

1. Lagerlift mit einer Vielzahl von übereinander und im Abstand voneinander an sich gegenüberliegenden Wänden eines Gehäuses angeordneten Stützprofilpaaren für ein- und auslagerbare Lagergutträger sowie mit einem gegenüber den Stützprofilpaaren (5) auf- und abbewegbaren Vertikalförderer, der mit einer Horizontalfördervorrichtung versehen ist, durch die in die Lagergutträger (6) eine Horizontalbewegung einleitbar ist, um sie vom Vertikalförderer auf jeweils ein Stützprofilpaar (5) oder von einem Stützprofilpaar (5) auf den Vertikalförderer zu überführen, wobei die Stützprofile (5) als in das Innere des Gehäuses ragende, integrale Ausbuchtungen von Profilplatte (12) ausgebildet sind, die einen im wesentlichen mäanderförmigen Querschnitt aufweisen und an vertikalen Tragpfosten (4) befestigt sind, **dadurch gekennzeichnet, daß** die Profilplatten (12) an ihrer Außenseite durch fest mit ihnen zu einem sandwichartigen Wandelement (7) verbundene Tragplatten (13) versteift sind und daß jede der mit Stützprofilen (5) versehenen Wände aus mehreren übereinander angeordneten Wandelementen (7) besteht, deren Tragplatten (13) einzeln in die Tragpfosten (4) einhängen.

2. Lagerlift nach Anspruch 1, **dadurch gekennzeichnet, daß** die Profilplatten (12) mindestens an ihren Rändern und in ihrer Mitte mit den Tragplatten (13) durch eine Vielzahl von Schweißpunkten (20) verbunden sind.

3. Lagerlift nach einem der Ansprüche 1 bis 2, **dadurch gekennzeichnet, daß** die Tragplatten (13) im Bereich ihrer mit den Tragpfosten (4) zu verbindenden Seitenränder den Tragpfosten (4) zugewandte U-förmige Profilabschnitte (14, 15) aufweisen, die sich in vertikaler Richtung erstrecken.

4. Lagerlift nach einem der Ansprüche 1 bis 3, **dadurch gekennzeichnet, daß** die Tragpfosten (4) mit Haltevorsprünge (10, 11) bildenden Ausstanzungen (9) versehen sind.

5. Lagerlift nach Anspruch 4, **dadurch gekennzeichnet, daß** die Ausstanzungen (9) im wesentlichen H-förmig ausgebildet sind.

6. Lagerlift nach Anspruch 4 oder 5, **dadurch gekennzeichnet, daß** die Tragpfosten (4) im Bereich mindestens eines ihrer Außenränder mit einer vertikal verlaufenden Reihe von im Abstand voneinander angeordneten Ausstanzungen (9) versehen sind.

7. Lagerlift nach Anspruch 6, **dadurch gekennzeichnet, daß** die Tragpfosten (4) einen C-Profilquerschnitt aufweisen und beidseits ihres Längsschlitzes (8) mit jeweils einer vertikalen Reihe von Ausstanzungen (9) versehen sind.

8. Lagerlift nach einem der Ansprüche 4 bis 7, **dadurch gekennzeichnet, daß** die Tragplatten (13) im Bereich ihrer Seitenränder mit mindestens jeweils einer Reihe gaubenförmige Vorsprünge (18) bildender Ausstanzungen (17) versehen sind.

9. Lagerlift nach Anspruch 8, **dadurch gekennzeichnet, daß** an jedem Seitenrand einer jeden Tragplatte (13) zwei parallel zueinander vertikal verlaufende Reihen von Ausstanzungen (17) angeordnet sind.

10. Lagerlift nach Anspruch 8 oder 9, **dadurch gekennzeichnet, daß** der vertikale Abstand zwischen den jeweils aufeinanderfolgenden Ausstanzungen (17) der Tragplatten (13) und der vertikale Abstand zwischen den jeweils aufeinanderfolgenden Ausstanzungen (9) der Tragpfosten (4) maximal gleich dem Abstand zwischen drei aufeinanderfolgenden Stützprofilen (5) ist.

11. Lagerlift nach einem der Ansprüche 1 bis 10, **dadurch gekennzeichnet, daß** die Seitenränder der Tragplatten (13) über die Stirnflächen der Profilplatten (12) vorstehen.

12. Lagerlift nach Anspruch 11, **dadurch gekennzeichnet, daß** mindestens ein Seitenrand der Tragplatten (13) als die Lagergutträger (6) zentrierende Leitflanke (16) ausgebildet ist.

13. Lagerlift nach einem der Ansprüche 1 bis 12, **dadurch gekennzeichnet, daß** die Wandelemente (7) sich im Bereich ihrer horizontalen Ränder überlappen.

14. Lagerlift nach Anspruch 13, **dadurch gekennzeichnet, daß** die Wandelemente (7) an einem ihrer horizontalen Ränder mit laschenförmigen Vorsprüngen (19) versehen sind.

15. Lagerlift nach einem der Ansprüche 1 bis 14, **dadurch gekennzeichnet, daß** die Stützprofile (5) einen von den Schenkeln eines rechtwinkligen Dreiecks gebildeten Querschnitt haben.

## Claims

1. Store lift with a multiplicity of pairs of supporting profiles which are spaced apart one above the other on mutually opposite walls of a housing and are intended for storage-article carriers which can be stored and retrieved, and with a vertical conveyer which can be moved up and down in relation to the pairs of supporting profiles (5) and is provided with a horizontal conveying arrangement by means of which a horizontal movement can be introduced into the storage-article carriers (6) in order to transfer them from the vertical conveyer to a pair of supporting profiles (5) in each case or from a pair of supporting profiles (5) to the vertical conveyer, the supporting profiles (5) being designed as convexities which project into the interior of the housing and are integral to profile panels (12) which have an essentially meandering cross section and are fastened on vertical supporting posts (4), **characterized in that** the profile panels (12) are stiffened on their outsides by supporting panels (13) which are firmly connected to them to form a sandwich-like wall element (7), and **in that** each of the walls provided with supporting profiles (5) comprises a plurality of wall elements (7) which are arranged one above the other and of which the supporting panels (13) are fitted individually into the supporting posts (4).

2. Store lift according to Claim 1, **characterized in that** the profile panels (12) are connected to the supporting panels (13) by a multiplicity of weld spots (20) at least at their borders and in their centre.

3. Store lift according to either of Claims 1 and 2, **characterized in that**, in the region of their side borders which are to be connected to the supporting posts (4), the supporting panels (13) have U-shaped profile sections (14, 15) which are directed towards the supporting posts (4) and extend in a vertical direction.

4. Store lift according to one of Claims 1 to 3, **characterized in that** the supporting posts (4) are provided with punched-out portions (9) which form retaining protrusions (10, 11).

5. Store lift according to Claim 4, **characterized in that** the punched-out portions (9) are of essentially H-shaped design.

6. Store lift according to Claim 4 or 5, **characterized in that**, in the region of at least one of their outer borders, the supporting posts (4) are provided with a vertically running row of spaced-apart punched-out portions (9).

7. Store lift according to Claim 6, **characterized in that** the supporting posts (4) have a C-profile cross section and are provided with a vertical row of punched-out portions (9) on both sides of their longitudinal slot (8) in each case.

8. Store lift according to one of Claims 4 to 7, **characterized in that**, in the region of its side borders, the supporting panels (13) are each provided with at least one row of punched-out portions (17) which form dormer-window-like protrusions (18).

9. Store lift according to Claim 8, **characterized in that** two rows of punched-out portions (17) which run vertically parallel to one another are arranged on each side border of each supporting panel (13).

10. Store lift according to Claim 8 or 9, **characterized in that** the vertical spacing between the respectively successive punched-out portions (17) of the supporting panels (13) and the vertical spacing between the respectively successive punched-out portions (9) of the supporting posts (4) is, at most, equal to the spacing between three successive portion profiles (5).

11. Store lift according to one of Claims 1 to 10, **characterized in that** the side borders of the supporting panels (13) project beyond the end surfaces of the profile panels (12).

12. Store lift according to Claim 11, **characterized in that** at least one side border of the supporting panels (13) is designed as a directing flank (16) which centres the storage-article carriers (6).

13. Store lift according to one of Claims 1 to 12, **characterized in that** the wall elements (7) overlap in the region of their horizontal borders.

14. Store lift according to Claim 13, **characterized in that** the wall elements (7) are provided with lug-like protrusions (19) on one of their horizontal borders.

15. Store lift according to one of Claims 1 to 14, **characterized in that** the supporting profiles (5) have a cross section which is formed by the legs of a right-angled triangle.

## Revendications

1. Elévateur de magasin possédant une pluralité de paires de profilés d'appui disposés les unes au-dessus des autres et à une certaine distance mutuelle, disposées contre des parois mutuellement opposées d'une carcasse, pour recevoir des supports de produits de magasin pouvant être mis en magasin et sortis de magasin, ainsi qu'un transporteur vertical qui peut monter et descendre par rapport aux paires de profilés d'appui (5), et qui est muni d'un dispositif de transport horizontal au moyen duquel un mouvement horizontal peut être transmis aux supports de produits de magasin (6) pour les transférer à chaque fois du transporteur vertical à une paire de profilés d'appui (5), ou d'une paire de profilés d'appui (5) au transporteur vertical, les profilés d'appui (5) étant constitués par des bossages de plaques profilées (12), venus de matière, en saillie dans le volume intérieur de la carcasse, qui présentent une section sensiblement en forme de méandre et qui sont fixés à des poteaux porteurs verticaux (4), **caractérisé en ce que** les plaques profilées sont raidies par des plaques porteuses (13) qui leur sont assemblées pour former un élément de paroi en sandwich (7), et **en ce que** chacune des parois munies de profilés d'appui (5) est composée de plusieurs éléments de parois disposés les uns au-dessus des autres, dont les plaques porteuses (13) peuvent être accrochées individuellement dans les poteaux porteurs (4).

2. Élévateur de magasin selon la revendication 1, **caractérisé en ce que** les plaques profilées (12) sont assemblées aux plaques porteuses (13), au moins le long de leurs bords et en leur milieu, par une pluralité de points de soudure (20).

3. Élévateur de magasin selon une des revendications 1 à 2, **caractérisé en ce que** les plaques porteuses (13) présentent, dans la région de leurs bords latéraux qui doivent être assemblés aux poteaux porteurs (4), des segments profilés en forme de U (14, 15), dirigés vers les poteaux porteurs (4) et qui s'étendent dans la direction verticale.

4. Élévateur de magasin selon une des revendications 1 à 3, **caractérisé en ce que** les poteaux porteurs (4) sont munis d'ouvertures découpées (9) qui forment des saillies de retenue (10, 11).

5. Élévateur de magasin selon la revendication 4, **caractérisé en ce que** les ouvertures découpées (9) sont d'une configuration pratiquement en forme de H.

6. Élévateur de magasin selon la revendication 4 ou 5, **caractérisé en ce que** les poteaux porteurs (4) sont munis, dans la région d'au moins de leurs bords extérieurs, d'une rangée verticale d'ouvertures découpées (9) disposés à distance les unes des autres.

7. Élévateur de magasin selon la revendication 6, **caractérisé en ce que** les poteaux porteurs (4) présentent une section en profil en C et sont munis d'une rangée verticale d'ouvertures découpées (9) sur chacun des deux côtés de leur fente longitudinale (8).

8. Élévateur de magasin selon une des revendications 4 à 7, **caractérisé en ce que** les plaques porteuses (13) sont munies dans leur région de bords latéraux, d'au moins à chaque fois d'une rangée d'ouvertures découpées (17) formant des saillies (18) en forme de lucarne.

9. Élévateur de magasin selon la revendication 8, **caractérisé en ce que** le long de chaque bord de chaque plaque porteuse (13), sont disposés deux rangées d'ouvertures découpées (17) s'étendant verticalement, parallèlement entre elles.

10. Élévateur de magasin selon la revendication 8 ou 9, **caractérisé en ce que** la distance verticale entre les ouvertures découpées successives (17) des plaques porteuses (13) et la distance entre les ouvertures découpées successives (9) des poteaux porteurs (4) sont au maximum égales à la distance entre trois profilés d'appui (5) successifs.

11. Élévateur de magasin selon une des revendications 1 à 10, **caractérisé en ce que** les bords latéraux de plaques porteuses (13) débordent au-delà des surfaces frontales des plaques profilées (12).

12. Élévateur de magasin selon la revendication 11, **caractérisé en ce qu'**au moins un bord latéral des plaques porteuses (13) est configuré comme une ailette de guidage (16) qui centre les supports de produits de magasin.

13. Élévateur de magasin selon une des revendications 1 à 12, **caractérisé en ce que** les éléments de parois (7) se chevauchent dans la région de leurs bords horizontaux.

14. Élévateur de magasin selon la revendication 13, **caractérisé en ce que** les éléments de parois (7) sont munis, le long de leurs bords horizontaux, de saillies (19) en forme de languettes.

15. Élévateur de magasin selon une des revendications 1 à 14, **caractérisé en ce que** les profilés d'appui (5) ont une section transversale formée par le côté d'un triangle rectangle.
